# EUROPÄISCHE PATENTSCHRIFT

(11) **EP 0 540 860 B1**
(45) Veröffentlichungstag und Bekanntmachung des Hinweises auf die Patenterteilung: **24.01.1996**
(21) Anmeldenummer: 92115636.0
(22) Anmeldetag: 12.09.1992
(51) Int. Cl.: B64G 1/50

(54) **Wärmetauscher**
Heat exchanger
Echangeur de chaleur

(30) Priorität: 02.11.1991 DE 4136219
(43) Veröffentlichungstag der Anmeldung: 12.05.1993
(73) Patentinhaber: Daimler-Benz Aerospace Aktiengesellschaft, D-80995 München (DE)
(72) Erfinder: Köppl, Alois, Dr., W-2805 Stuhr-Moordeich (DE)
(74) Vertreter: Hansmann, Dierk, Dipl.-Ing.

(56) Entgegenhaltungen:
- US-A- 4 702 309
- US-A- 4 789 517
- US-A- 4 974 668
- NTIS TECH NOTES. Nr. 3D, März 1985, SPRINGFIELD, VA US Seite 283 'LIQUID-DROPLET RADIATIVE COOLER'

## Beschreibung

Die Erfindung betrifft einen Wärmetauscher, insbesondere für Raumflugkörper, in Form eines Tröpfchenradiators, mit einem Tröpfchenerzeuger, einem Tröpfchenkollektor sowie einer Rückführeinrichtung für eine Kühlflüssigkeit, wobei der Tröpfchenkollektor die Form eines rotationssymmetrischen Körpers aufweist und der Tröpfchenerzeuger im Rotationszentrum des Tröpfchenkollektors angeordnet ist und wobei zumindest der Tröpfchenkollektor in eine Drehbewegung um seine Symmetrieachse versetzbar ist.

Wärmetauscher dieser Art sind aus der US-A-4,789,517 bekanntgeworden. Sie gewinnen aufgrund ihrer hohen Leistungsfähigkeit bei im Vergleich zu konventionellen Radiatoren gleicher Masse und wegen ihrer wesentlich geringen Empfindlichkeit gegenüber Meteoriteneinschlägen in der Raumfahrttechnik zunehmend an Bedeutung.

Die größere Leistungsfähigkeit derartiger Wärmetauscher beruht darauf, daß bei einem Tröpfchenradiator die abzugebende Wärme nicht auf dem Umweg über einen Radiatorwerkstoff an das Weltall abgeführt wird, sondern daß die Wärme von der Kühlflüssigkeit direkt in das Weltall abgestrahlt wird. An die Stelle eines konventionellen Radiators tritt eine sich frei bewegende Tröpfchenwolke. Diese Tröpfchen werden im Tröpfchengenerator erzeugt, fliegen über eine freie Wegstrecke, wobei sie ihre Wärme abgeben, und werden anschließend im Tröpfchenkollektor gesammelt, um von dort an die Wärmeaufnahmestelle zurückbefördert, in der Regel gepumpt, zu werden. Als Wärmeaufnahmestelle dient dabei üblicherweise ein konventioneller Wärmetauscher.

Der Erfindung liegt die Aufgabe zugrunde, einen Wärmetauscher der eingangs genannten Art so auszubilden, daß er bei einer möglichst geringen Systemmasse eine möglichst hohe Effektivität und Flexibilität aufweist.

Diese Aufgabe wird erfindungsgemäß durch einen Wärmetauscher mit den kennzeichnenden Merkmalen des Patentanspruchs 1 gelöst.

Der Wärmetauscher nach der Erfindung gleicht in seinem Aufbau einem rotierenden Rad, in dessen Achse die Tröpfchen erzeugt und von dort radial nach außen versprüht werden, um dann gleichsam an der Felge aufgefangen und von dort zur Wärmeaufnahmestelle zurückbefördert zu werden. Wesentliche Vorteile des erfindungsgemäßen Wärmetauschers sind seine kompakte, leichte Bauform und die wesentlich verbesserte Wärmeabstrahlung, die mit den Tröpfchen erzielbar ist.

Zwar sind aus der Druckschrift J. Persson "Liquid Droplet Radiotor Research", EWP-1579/ESTEC 1990, Seiten 4 - 50 und 4 - 51, sowie aus der US-A-4,974,668 bereits Tröpfchenradiatoren bekanntgeworden, bei denen der Tröpfchenkollektor die Form eines einseitig offenen Rotationskörpers aufweist, jedoch sind bei diesen bekannten Anordnungen die Tröpfchenerzeuger nicht innerhalb fdes Kollektors angeordnet, woraus ein wesentlich höherer Flüssigkeitsverlust resultiert.

Weitere Vorteile resultieren aus den in den Unteransprüchen angegebenen Weiterbildungen des erfindungsgemäßen Wärmetauschers.

So kann eine gute Regelbarkeit des Kollektors durch das Abschalten einzelner Sektoren des Tröpfchenerzeugers ohne Nachteile für die Strömung erreicht werden. Weiterhin kann ohne großen konstruktiven Mehraufwand ein Sekundärkreislauf in den Kollektor integriert werden. Dieser senkt auf der einen Seite den für die Rückführung der zu Tropfen dispergierten Kühlflüssigkeit erforderlichen Aufwand noch weiter, auf der anderen Seite erhöht er zusätzlich die Stabilität des Kollektors.

Die Verwendung eines derartigen Sekundärkühlkreislaufes hat dabei den Vorteil, daß sie die Auswahl der Kühlflüssigkeit für den primären Kühlkreislauf wesentlich erleichtert, da sie die für deren Rückführung erforderliche Pumpleistung reduziert. Diese Kühlflüssigkeit soll bei den auftretenden Temperaturen einerseits eine niedrige Zähigkeit und andererseits einen geringen Dampfdruck aufweisen. Dadurch soll ein zu starkes Verdampfen der Kühlflüssigkeit auf dem Weg vom Tröpfchengenerator zum Kollektor vermieden und die erforderliche Pumpleistung niedrig gehalten werden. Da sich aber Zähigkeit und Dampfdruck bei den als Kühlmedien in Frage kommenden Flüssigkeiten in der Regel gegenläufig verhalten, resultiert hieraus eine Schwierigkeit, die durch die Einführung eines Sekundärkühlkreislaufs und die daraus resultierende geänderte Prozeßführung vermieden werden kann.

Eine besonders einfache, leichte und wenig Transportraum beanspruchende Ausführung des Wärmetauschers nach der Erfindung ergibt sich, in diesem Zusammenhang, wenn der Kollektor von einem Kunststoffschlauch gebildet wird, der durch das Kühlmedium des Sekundärkreislaufs aufgeblasen wird.

Im folgenden soll die Erfindung anhand dieser in der Zeichnung dargestellter Ausführungsbeispiele dargestellt werden. Die Figuren zeigen dabei jeweils Teilschnitte durch verschieden ausgebildete Wärmetauscher gemäß der Erfindung.

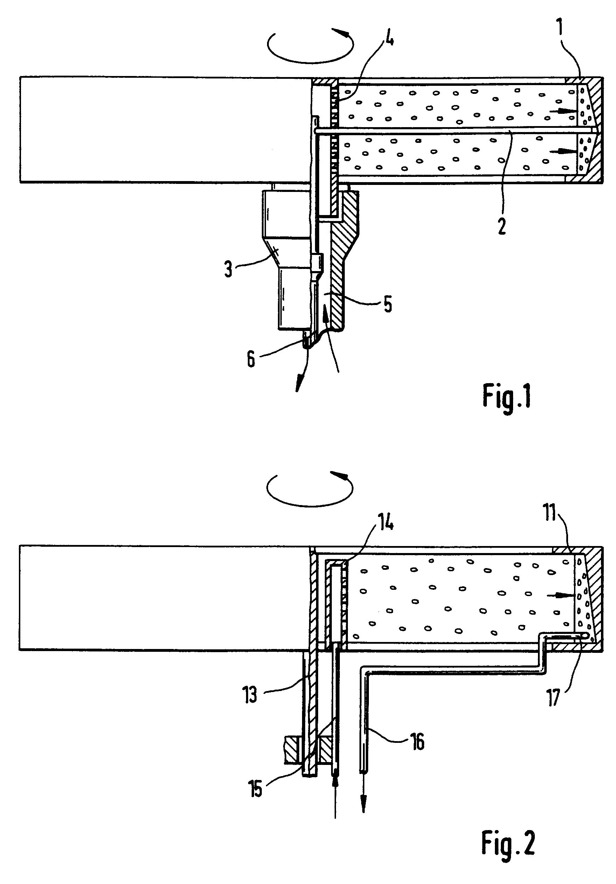

Die in Fig. 1 dargestellte Tröpfchenradiator weist die Form eines Rades auf, bei dem ein äußerer Mantel 1 über eine Anzahl von Speichen 2 mit einer Antriebswelle 3 verbunden ist. Die Antriebswelle 3 ist im Fall des hier dargestellten Ausführungsbeispiels der Erfindung in einem Teilbereich zugleich als Generator 4 zur Erzeugung von Tröpfchen aus dem zugeführten Kühlmittelstrom ausgebildet. Das Kühlmittel gelangt dabei über einen Einlauf 5 durch die als Hohlwelle ausgebildete Antriebswelle 3 in den Generator 4.

Wie aus der Figur ersichtlich, weist der Mantel 1 ein angenähert U-förmig ausgebildetes Profil auf, an dessen tiefster Stelle die Speichen 2 angreifen. Diese Speichen 2 sind bei dem hier beschriebenen Ausführungsbeispiel zugleich als Rückpumpleitungen ausgebildet, über die die am Mantel aufgenommenen Kühlmitteltröpfchen zu einer in der Antriebswelle 3 angeordneten Rückführleitung 6 und durch diese zu einer Pumpe zurückfließen. Diese Pumpe ist, ebenso wie eine Drehantriebseinheit für das System, in der Zeichnung nicht dargestellt. Vervollständigt wird die Anordnung durch einen Wärmetauscher konventioneller Bauart, in dem die abzuführende Wärme auf die Kühlflüssigkeit übertragen wird und von wo aus die Kühlflüssigkeit zum Einlauf 5 gelangt, so daß der Tröpfchenradiator, die Pumpe und dieser konventionelle Wärmetauscher zusammen ein geschlossenes System für die Kühlflüssigkeit bilden.

Die Drehantriebseinheit versetzt über die Antriebswelle 3 die gesamte Anordnung in eine Rotationsbewegung um ihre Mittelachse, so daß die vom Generator 4 erzeugten Tröpfchen unter der Wirkung der Zentrifugalkraft zum Kollektor 1 fliegen.

Die im konventionellen Wärmetauscher auf die Kühlflüssigkeit übertragene Wärme wird von dieser auf ihrem Weg von Tröpfchengenerator 4 zum Kollektor 1 an die Umgebung, in diesem Fall das Weltall, die freien Zutritt zu dem Raum zwischen den Speichen 2 hat, abgegeben. Die am Kollektor 1 aufgefangenen Tröpfchen werden infolge der auf sie wirkenden Zentrifugalkraft in die von den Speichen 2 gebildete Absaugleitung gepreßt und über die Rückführleitung 6 sowie die Pumpe zur Wärmeaufnahmestelle, in diesem Fall den erwähnten konventionellen Wärmetauscher, zurückbefördert.

Während bei der vorstehend beschriebenen Anordnung sowohl der Tröpfchengenerator als auch die Absaugleitung gemeinsam mit dem Kollektor rotieren, wird bei dem in Fig. 2 dargestellten Ausführungsbeispiel nur der Kollektor in Drehbewegung versetzt, während sowohl der Generator als auch die Absaugleitung feststehend ausgebildet sind. Erreicht wird dies durch eine Trennung der äußeren Struktur des Tröpfchenradiators, d.h. des Mantels 11, der (hier nicht dargestellt) Speichen sowie die Antriebswelle 13, vom Tröpfchengenerator 14 und von einem Absaugrohr 17. Das Absaugrohr 17 ist wiederum über eine Rückführleitung 16 mit einer Pumpe verbunden, während der in diesem Fall ringförmig ausgebildete Generator 14 durch eine Zuführleitung 15 mit der Wärmeübertragungseinheit, d.h. dem konventionellen Wärmetauscher, verbunden ist.

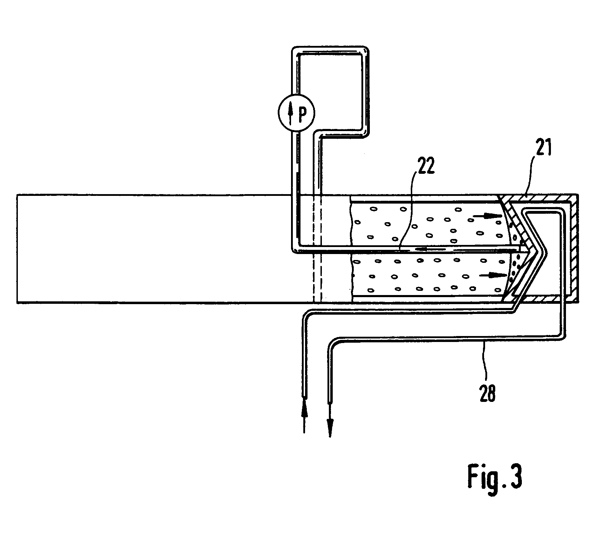

Bei dem in Fig. 3 schematisch dargestellten Ausführungsbeispiel schließlich ist ein Sekundärkühlkreislauf in den Tröpfchenkollektor integriert. Der Kollektormantel 21 ist zu diesem Zweck hohl ausgebildet, der dadurch entstehende Innenraum nimmt einen Teil eines SekundärkühlkreislaufS 28 auf. Die Rückführung des Kühlmediums des Primärkreislaufs erfolgt bei diesem Ausführungsbeispiel, analog zu der in Fig. 1 dargestellten Anordnung, über die Speichen 22 des Rades. Es ist aber selbstverständlich im Rahmen der Erfindung auch möglich, eine Anordnung wie sie in Fig. 2 dargestellt ist, mit einem Sekundärkühlkreislauf auszustatten.

## Patentansprüche

1. Wärmetauscher, insbesondere für Raumflugkörper, in Form eines Tröpfchenradiators, mit einem Tröpfchenerzeuger, einem Tröpfchenkollektor sowie einer Rückführeinrichtung für eine Kühlflüssigkeit, wobei der Tröpfchenkollektor die Form eines rotationssymmetrischen Körpers aufweist und der Tröpfchenerzeuger im Rotationszentrum des Tröpfchenkollektors angeordnet ist und wobei zumindest der Tröpfchenkollektor in eine Drehbewegung um seine Symmetrieachse versetzbar ist, dadurch gekennzeichnet, daß der Tröpfchenkollektor (1,11,21) die Form eines Rades aufweist, das über Speichen (2,22) an einer Antriebswelle (3) gehaltert ist und in dessen Zentraum der Tröpfchenerzeuger (4,14) angeordnet ist und die erzeugten Tröpfchen in radialer Richtung ausschleudert.

2. Wärmetauscher nach Anspruch 1, dadurch gekennzeichnet, daß die Speichen (2, 22) als Rückführleitung für die Kühlflüssigkeit ausgebildet sind.

3. Wärmetauscher nach Anspruch 1 oder 2, dadurch gekennzeichnet, daß der Tröpfchenerzeuger (14) in die Antriebswelle (3) integriert ist.

4. Wärmetauscher nach Anspruch 1 oder 2, dadurch gekennzeichnet, daß der Tröpfchenerzeuger (14) die Antriebswelle (13) ringförmig umgibt.

5. Wärmetauscher nach einem der Ansprüche 1 bis 4, dadurch gekennzeichnet, daß zusätzlich zu dem vom Tröpfchenerzeuger (4, 14) und vom Tröpfchenkollektor (1, 11, 21) gebildeten Primärkühlkreislauf ein Sekundärkühlkreislauf (28) vorgesehen ist.

6. Wärmetauscher nach Anspruch 5, dadurch gekennzeichnet, daß der Sekundärkühlkreislauf (28) teilweise im Innern des als Hohlkörper ausgebildeten Tröpfchenkollektors (21) angeordnet ist.

7. Wärmetauscher nach Anspruch 6, dadurch gekennzeichnet, daß der Tröpfchenkollektor (21) von einem Kunststoffschlauch gebildet wird.

## Claims

1. Heat exchanger, in particular for space vehicles, in the form of a droplet radiator, with a droplet generator, a droplet collector and a recirculating device for a coolant, whereby the droplet collector takes the form of an axially symmetrical body and the droplet generator is arranged in the centre of rotation of the droplet collector and whereby at least the droplet collector is capable of being set in rotary motion about its axis of symmetry, characterised in that the droplet collector (1,11,21) takes the form of a wheel which is supported by means of spokes (2,22) on a drive shaft (3) and in the centre of which the droplet generator (4,14) is arranged which expels the generated droplets in the radial direction.

2. Heat exchanger according to Claim 1, characterised in that the spokes (2,22) are designed as recirculating line for the coolant.

3. Heat exchanger according to Claim 1 or 2, characterised in that the droplet generator (14) is integrated within the drive shaft (3).

4. Heat exchanger according to Claim 1 or 2, characterised in that the droplet generator (14) surrounds the drive shaft (13) in the manner of a ring.

5. Heat exchanger according to one of Claims 1 to 4, characterised in that in addition to the primary cooling circuit formed by the droplet generator (4,14) and the droplet collector (1,11,21) a secondary cooling circuit is provided.

6. Heat exchanger according to Claim 5, characterised in that the secondary cooling circuit (28) is arranged partially within the droplet collector (21) which takes the form of a hollow body.

7. Heat exchanger according to Claim 6, characterised in that the droplet collector (21) is constituted by a plastic hose.

## Revendications

1. Echangeur thermique destiné en particulier aux engins spatiaux et présentant la forme d'un radiateur à gouttelettes composé d'un générateur de gouttelettes, d'un collecteur de gouttelettes ainsi que d'un dispositif de remise en circulation pour liquide de refroidissement, le collecteur de gouttelettes présentant la forme d'un corps à symétrie de révolution et le générateur de gouttelettes étant disposé au centre de rotation du collecteur de gouttelettes, au moins le collecteur de gouttelettes pouvant être déplacé par un mouvement de rotation autour de son axe de symétrie, **caractérise en ce que** le collecteur de gouttelettes (1, 11, 21) présente la forme d'une roue, laquelle est maintenue sur un arbre de transmission (3) par le biais de rayons (2, 22) et au centre de laquelle est disposé le générateur de gouttelettes (4, 14), lequel éjecte les gouttelettes produites dans la direction radiale.

2. Echangeur thermique selon la revendication 1, caractérisé en ce que les rayons (2, 22) sont conçus comme une conduite de retour pour le liquide de refroidissement.

3. Echangeur thermique selon l'une ou l'autre des revendications 1 et 2, caractérisé en ce que le générateur de gouttelettes (14) est intégré dans l'arbre de transmission (3).

4. Echangeur thermique selon l'une ou l'autre des revendications 1 et 2, caractérisé en ce que le générateur de gouttelettes (14) enveloppe tel un anneau l'arbre de transmission (3).

5. Echangeur thermique selon l'une ou l'autre des revendications 1 à 4, caractérisé en ce que en plus du circuit primaire de refroidissement formé par le générateur de gouttelettes (4, 14) et par le collecteur de gouttelettes (1, 11, 21), il est prévu un circuit secondaire de refroidissement (28).

6. Echangeur thermique selon la revendication 5, caractérisé en ce que le circuit secondaire de refroidissement (28) est disposé partiellement à l'intérieur du collecteur de gouttelettes (21) conçu comme un corps creux.

7. Echangeur thermique selon la revendication 6, caractérisé en ce que le collecteur de gouttelettes (21) est formé d'un tuyau flexible.
